**Europäisches Patentamt**

**European Patent Office**

**Office européen des brevets**

(19)

(11) Veröffentlichungsnummer: **0 193 039**

**A1**

(12)

# EUROPÄISCHE PATENTANMELDUNG

(21) Anmeldenummer: 86101856.2

(22) Anmeldetag: 13.02.86

(51) Int. Cl.⁴: **H 02 J 9/06**

(30) Priorität: 25.02.85 DE 3506572

(43) Veröffentlichungstag der Anmeldung:
03.09.86 Patentblatt 86/36

(84) Benannte Vertragsstaaten:
DE FR GB

(71) Anmelder: **Siemens Aktiengesellschaft Berlin und München**
**Wittelsbacherplatz 2**
**D-8000 München 2(DE)**

(72) Erfinder: **Gaul, Hartmut, Dipl.-Ing.**
**Klebheimer Strasse 5**
**D-8551 Röttenbach(DE)**

(72) Erfinder: **Haböck, Adolf, Dipl.-Ing.**
**Am Goldberg 1**
**D-8551 Röttenbach(DE)**

(72) Erfinder: **Mickal, Herman, Dipl.-Ing.**
**Falkenstrasse 49**
**D-8520 Erlangen(DE)**

(54) Verfahren und Vorrichtung zur unterbrechungsfreien Stromversorgung.

(57) Um an eine sichere Schiene angeschlossene Verbraucher (V1, V2, V3) zu speisen, ist ein Versorgungsnetz N im ungestörten Zustand über einen mechanischen Schalter SW an das Netz anschließbar und hält über eine Stromrichteranordnung SR, die vorteilhaft als Phasenschieber zur Konstanthaltung der Versorgungsspannung arbeitet, einen Energiespeicher B geladen. Bei Netzstörung wird der Speicher B über die Stromrichteranordnung SR entladen und der mechanische Schalter SW geöffnet. Das Öffnen dieses Schalters ist nicht kritisch, da zwischen Schalter SW und sicherer Schiene SS eine Induktivitätsanordnung mit einem Hilfsschalter SE angeordnet ist. Bei einer Netzstörung (Hilfsschalter SE geöffnet) wird eine große Induktivität (13) der Induktivitätsanordnung wirksam, die im ungestörten Netzzustand überbrückt ist. Daher sind im ungestörten Zustand nur geringe Induktivitäten (l1, l2) wirksam, über die aus dem Netz N ein hoher Strom fließen kann, der im Falle eines Verbraucherkurzschlusses zum Ansprechen der Verbrauchersicherungen (VS) ausreicht.

FIG 1

**0193039**

SIEMENS AKTIENGESELLSCHAFT          Unser Zeichen:

Berlin und München                  VPA **85 P 3066** E

<u>Verfahren und Vorrichtung zur unterbrechungsfreien
Stromversorgung</u>

Die Erfindung betrifft ein Verfahren zur unterbrechungsfreien Stromversorgung von Wechselstromverbrauchern mit
den Merkmalen des Oberbegriffs des Anspruchs 1. Die Erfindung betrifft ferner eine Vorrichtung zur Durchführung
des Verfahrens.

Viele Verbraucher, vor allem Geräte der Datenverarbeitung,
erfordern eine Speise-Wechselspannung, deren Frequenz und
Amplitude nur innerhalb enger Toleranzgrenzen variieren
darf und bei der vor allem bereits kurzzeitige Unterbrechungen zu Betriebsstörungen führen. Bei einem Ausfall
der Spannung im üblichen, von einem Energieversorgungsunternehmen gespeisten Wechselstrom-Versorgungsnetz muß
daher die Speisespannung für die empflindlichen Verbraucher einem geladenen Energiespeicher, z.B. einer Batterie,
entnommen und über eine Stromrichteranordnung hinsichtlich Frequenz und Amplitude in die geforderte Speisespannung der Verbraucher umgesetzt werden, wobei gleichzeitig
ein Rückfluß der dem Energiespeicher entnommenen Energie
in das gestörte Versorgungsnetz unterbunden werden muß.

Daher enthalten übliche unterbrechungsfreie Stromversorgungen häufig einen an das Versorgungsnetz angeschlossenen Gleichrichter, der bei intaktem Versorgungsnetz den
Energiespeicher im aufgeladenen Zustand hält, während ein
dem Energiespeicher nachgeschalteter Wechselrichter die
entweder dem Versorgungsnetz entnommene und gleichgerichtete Spannung oder bei Netzausfall die Spannung des Energiespeichers als gesicherte Verbraucherspannung an die
die Verbraucher speisende sichere Schiene abgibt. Hierzu

Kbl 2 Rch / 19.2.1985

sind keine Umschaltvorgänge nötig, jedoch bedingt die Gleichrichtung und anschließende Wechselrichtung der Versorgungsspannung im ungestörten Zustand des Versorgungsnetzes einen erheblichen Energieverlust, der häufig mit unerwünschter Geräusch- und Wärmeentwicklung verbunden ist.

Eine andere Möglichkeit besteht darin, die Verbraucher im ungestörten Zustand des Versorgungsnetzes direkt aus dem Versorgungsnetz zu speisen, während dann die Stromrichteranordnung nur dazu benötigt wird, um den Energiespeicher im aufgeladenen Zustand zu halten. Bei Netzstörung muß die Stromrichteranordnung allerdings sofort die Speisung der Verbraucher übernehmen. Wird der Energiespeicher über einen für den 4-Quadranten-Betrieb ertüchtigten Stromrichter an die sichere Schiene angeschlossen, so kann über eine Überwachungseinheit, die den Zustand des Netzes, den Energieverbrauch der Verbraucher und den Ladezustand der Batterie überwacht, so gesteuert werden, daß der Energiespeicher bei ungestörtem Netz im geladenen Zustand gehalten wird, der Stromrichter also praktisch im Leerlauf arbeitet. In der US-PS 40 20 360 ist ein Wechselrichter beschrieben, dessen Leistungsteil darüber hinaus bei ungestörtem Netz und aufgeladenem Energiespeicher stillgesetzt und in Startbereitschaft gehalten werden kann, um bei einer Netzstörung sofort kommutierfähig zu sein und die nötige Verbraucherenergie dem Energiespeicher entnehmen zu können. Dadurch entfallen im Normalbetrieb jegliche durch eine Energieumsetzung im Leistungsteil bedingte Energieverluste.

Um an der sicheren Schiene ohne Phasen- oder Amplitudensprung die Spannung aufrecht zu erhalten, ist es allerdings nötig, daß die Steuerung der Wechselrichteranordnung bei einer Netzstörung sofort mit der in diesem Augenblick vorhandenen Spannungsaussteuerung und Phasen-

0193039

lage arbeitet. Hierzu kann z.B. nach der US-PS 40 20 360 ein Wechselrichtermodell vorgesehen sein, das in Abhängigkeit vom Ladezustand des Energiespeichers, der Phasenlage der Verbraucherspannung sowie dem momentan erforderlichen Verbraucherstrom jeweils solche Zündimpulse liefert, die bei arbeitendem Leistungsteil dazu führen würden, daß der Stromrichter dem Energiespeicher die geforderte Leistung phasenrichtig zur Verfügung stellen würde, wobei aber diese Zündimpulse entsprechend dem stillgesetzten Leistungsteil des Wechselrichters gesperrt bleiben. Erst bei einer Störung des Versorgungsnetzes werden die Zündimpulse auf den gleichzeitig gestarteten Leistungsteil aufgeschaltet.

Bei diesem Bereitschaftsbetrieb des Wechselrichters bzw. seiner Steuereinrichtung wird die sichere Schiene vom Versorgungsnetz mittels eines Schalters getrennt, sobald eine Netzstörung vorliegt und eine Rückspeisung des gestörten Netzes aus der - nunmehr vom Energiespeicher gespeisten - sicheren Schiene zu befürchten ist. Die dabei auftretenden Umschaltzeiten müssen kurz bemessen sein. Vorteilhaft kann den Verbrauchern dabei ein an die sichere Schiene angeschlossenes Filter vorgeschaltet sein (US-PS 39 99 078), das als kurzzeitiger Energiespeicher während der Umschaltzeiten die Versorgungsspannung zu puffern gestattet. Ein derartiges Filter ist auch vorteilhaft, um Oberschwingungen und Spannungsspitzen zu unterdrücken, die im Versorgungsnetz vorhanden sind oder durch den Stromrichterbetrieb entstehen.

Der zur Entkopplung der sicheren Schiene vom Versorgungsnetz bei einem Netzkurzschluß erforderliche Schalter ist in aller Regel als elektronischer Schalter ausgebildet, um die kurzen Schaltzeiten zu ermöglichen. Die Stromtragfähigkeit derartiger elektronischer Schalter ist jedoch begrenzt, d.h. bei einem verbraucherbedingten Kurzschluß

0193039
VPA 85 P 3066 E

auf der sicheren Schiene kann ein sprunghaft wachsender Kurzschlußstrom, der zur Zerstörung des elektronischen Schalters führen könnte, nicht zugelassen werden. So wird z.B. dem elektronsichen Schalter ein Transformator nachgeschaltet, der neben der vom Versorgungsnetz über den Schalter gespeisten Primärwicklung eine zweite, über die Stromrichteranordnung an die Batterie angeschlossene Primärwicklung aufweist. Ein derartiger Transformator begrenzt einerseits den Stromfluß vom Versorgungsnetz auf die sichere Schiene, er ermöglicht andererseits auch, über die Steuerung des Wechselrichters bei zwar vorhandener, aber ungenügender Netzspannung in die sichere Schiene eine parallele Einspeisung von induktiver Blindleistung aus der Batterie vorzunehmen (oder vorübergehende Überspannungen des Netzes durch Aufnahme induktiver Blindleistung zu verringern) sowie einen Betrieb des Wechselrichters als Spannungskonstanthalter.

Die an die sichere Schiene angeschlossenen Verbraucher sind in der Regel durch eine eigene Sicherung geschützt, damit diese Verbraucher bei einer Störung die sichere Schiene nicht durch einen hohen Kurzschlußstrom belasten und somit zu einer Störung anderer an die sichere Schiene ebenfalls angeschlossene Verbraucher führen.

Derartige Verbrauchersicherungen müssen nun entsprechend der beschränkten Stromtragfähigkeit des verwendeten elektronischen Schalters sehr empfindlich ausgelegt sein oder sie benötigen zum Ansprechen hohe, über den elektronischen Schalter fließende Ströme, wodurch entsprechende konstruktive und aufwendige Maßnahmen am elektronischen Schalter erforderlich werden. Aufgabe der Erfindung ist es nun, eine unterbrechungsfreie Stromversorgung zu schaffen, die einerseits einen hohen Wirkungsgrad und geringe Leistungsverluste ermöglicht, andererseits eine einfache Entkopplung der sicheren Schiene vom Versorgungsnetz bei Netzkurzschlüssen ermöglicht, ohne daß aufwendige
Sonderkonstruktionen für das zuverlässige Ansprechen der
Verbrauchersicherungen erforderlich sind.

Diese Aufgabe wird gelöst durch ein Verfahren mit den
Merkmalen des Anspruchs 1 bzw. eine Vorrichtung mit den
Merkmalen des Anspruchs 4.

Vorteilhafte Weiterbildungen der Erfindung sind in den
Unteransprüchen gekennzeichnet und werden anhand zweier
Figuren näher erläutert.

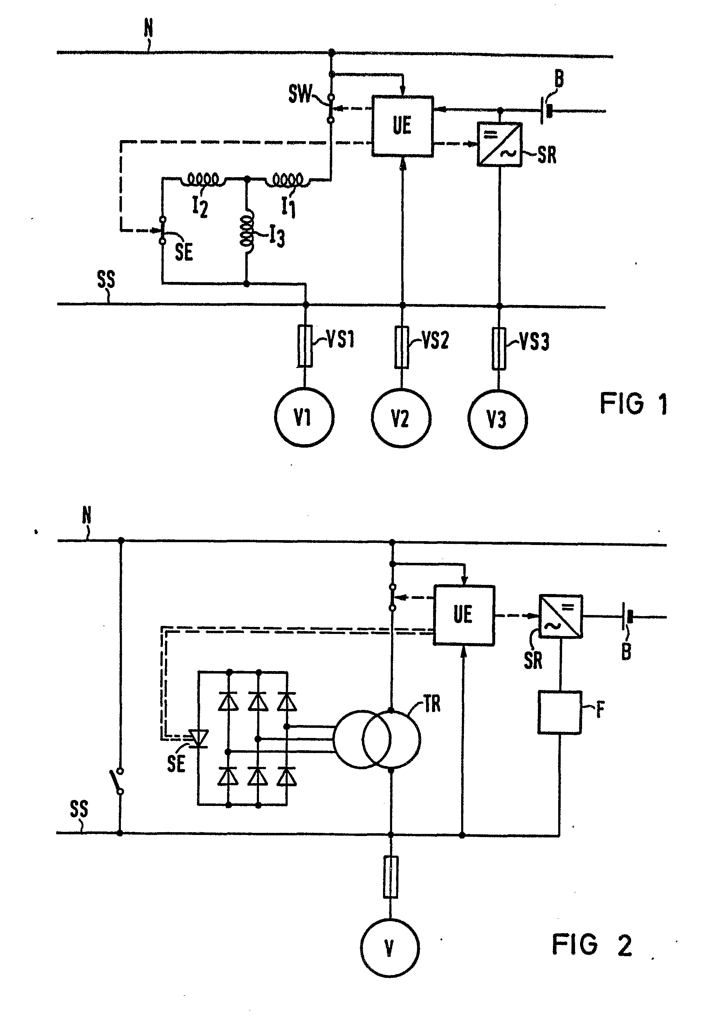

Figur 1 zeigt in einem Prinzipschaltbild das Wesen der
Erfindung, Figur 2 zeigt ein bevorzugtes Ausführungsbeispiel einer derartigen Vorrichtung.

Gemäß Figur 1 sind die Verbraucher V1, V2 und V3 über
ihre Verbrauchersicherungen VS1, VS2, VS3 an eine sichere
Schiene SS angeschlossen. Der Zustand eines Wechselstrom-
versorgungsnetzes N wird von einer Überwachungseinrichtung UE auf Störungen überwacht. Derartige Störungen
können sprunghafte Änderungen von Frequenz und Phase oder
unzulässige Abweichungen der Amplitude (bis hin zu einem
vollkommenen Zusammenbruch der Netzspannung) von vorgegebenen Nennwerten sein.

Bei ungestörtem Netzzustand wird von der Überwachungseinheit ein Schalter SW geschlossen, der vorteilhaft
nicht als elektronischer Schalter, sondern als Unterbrecher oder Schütz ausgebildet ist, und somit eine
hohe Stromtragfähigkeit besitzt. Dieser Schalter verbindet das Versorgungsnetz N mit einer Induktivitätsanordnung I1, I2, I3,über die bei ungestörtem Netz die sichere Schiene SS gespeist wird.

Ferner ist eine Stromrichteranordnung SR vorgesehen, die ebenfalls von der Überwachungseinrichtung UE angesteuert wird und im ungestörten Zustand eine als Energiespeicher dienende Batterie B im aufgeladenen Zustand hält. Vorteilhaft ist die Überwachungseinrichtung und die Stromrichteranordnung so ausgebildet, daß z.B. mittels eines Wechselrichtermodells Zündimpulse gebildet werden, mit denen jeweils unverzögert die Speisung der sicheren Schiene aus dem Energiespeicher übernommen werden kann; diese Zündimpulse bleiben aber gesperrt und die Stromrichteranordnung wird lediglich in Startbereitschaft gehalten, solange der Energiespeicher voll und das Versorgungsnetz N ungestört ist.

Beim Auftreten einer Netzstörung werden nun die Verbraucher durch Öffnen des Schalters SW vom Versorgungsnetz N getrennt und über die Stromrichteranordnung SR aus dem Energiespeicher B gespeist. Ein einfacher Schalter, insbesondere ein Relais, ermöglicht aber nicht, den Stromfluß zwischen Netz und sicherer Schiene rasch und bei jeder Phasenlage zu unterbrechen. Deshalb ist die Induktivitätsanordnung so ausgebildet, daß ihre auf den zwischen Netz und sicherer Schiene fließenden Strom wirkende Induktivität umschaltbar ist. Hierzu sind steuerbare (insbesondere elektronische) Schaltmittel SE vorgesehen. Im dargestellten Fall besteht die Induktivitätsanordnung einerseits aus den Induktivitäten I1, I2, andererseits aus der wesentlich größeren Induktivität I3, die so angeordnet sind, daß bei geschlossenen Schaltmitteln SE die große Induktivität I3 über die Induktivität I2 kurzgeschlossen ist. Im ungestörten Zustand ist also nur die niedrige Induktivität I1, I2 wirksam, an denen nur sehr geringe Verluste auftreten. Ein Kurzschluß in einem der Verbraucher V1, V2 oder V3 bewirkt dabei ein weitgehend ungehindertes Anwachsen des Stromes durch I1 und I2, bis die entsprechende Verbrauchersicherung anspricht.

Im Falle einer Netzstörung jedoch wird durch Öffnen der Schaltmittel SE anstelle der geringen Induktivität I2 nunmehr die große Induktivität I3 wirksam, die ein Ansteigen des Stromes nunmehr in der Richtung von der sicheren Schiene zum Netz N so dämpft, daß weder die Phasenlage von Strom und Spannung noch die Ausschaltzeit des mechanischen Schalters SW kritisch ist.

Die in Fig. 1 gezeigte Anordnung der Induktivitäten I1, I2 und I3 entspricht dem Ersatzschaltbild eines Transformators. Dadurch wird deutlich, daß vorteilhaft ein Transformator verwendet werden kann, um die für die Erfindung benötigte Induktivitätsanordnung zu realisieren, deren wirksame Induktivität so umschaltbar ist, daß der Wert der wirksamen Induktivität im ungestörten Netzzustand auf einem kleinen Wert (z.B. $U_K \approx 5\%$) gehalten und beim Auftreten des gestörten Zustandes auf einen großen Wert umgesteuert wird.

Eine entsprechende Anordnung ist in Fig. 2 gezeigt. Als Schaltmittel ist dabei ein elektronischer Hilfsschalter, z.B. ein Gleichstromsteller oder ein abschaltbarer Thyristor verwendet, der über eine ungesteuerte Gleichrichterbrücke an die Sekundärwicklung des Transformators TR angeschlossen ist. Der Transformator enthält dabei keine weitere, zwischen sicherer Schiene und der Stromrichteranordnung SR angeordnete Wicklung, d.h. die Induktivitätsanordnung ist nicht mit der Stromrichteranordnung und deren Anschlüsse induktiv gekoppelt. Vielmehr ist der Energiespeicher B über die Stromrichteranordnung SR nur an die sichere Schiene angekoppelt. Vorteilhaft ist er, wie bereits erwähnt wurde, ein für den 4-Quadranten-Betrieb ertüchtigter Pulswechselrichter, der als Laderegler und Spannungskonstanthalter arbeitet. Dadurch ist es möglich, den Wechselrichter über die Überwachungseinrichtung UE auf eine konstante Ausgangswechselspannung zu steuern.

Mit F ist ferner ein Filter angeordnet, das, wie ebenfalls eingangs bereits erwähnt wurde, den Verbrauchern vorteilhaft vorgeschaltet wird und hier zwischen dem Stromrichter SR und der sicheren Schiene SS angeschlossen ist.

Wird bei der Anordnung nach Fig. 2 bei ungestörtem Netz sowohl der mechanische Schalter SW wie der elektronische Schalter SE durchgesteuert, so ist somit nur die Streuinduktivität des Transformators TR wirksam. Der dabei auftretende induktive Spannungsabfall $U_k$ beträgt z.B. etwa 3 - 5%. Ist bei vollem Speicher ein Betrieb des Wechselrichters SR als Spannungs-Konstanthalter nicht erforderlich, so werden die Zündimpulse gesperrt und die im ungestörten Netzbetrieb auftretende Verlustenergie besteht überwiegend aus einem konstanten, vom Filter F verursachten Anteil. Hinzu kommen stromabhängige Anteile, die von den Induktivitäten sowie vom elektronischen Schalter hervorgerufen werden. Dadurch kann erreicht werden, daß bei Vollast die Verlustleistung nur etwa 3% der Nennleistung beträgt.

Wird es dagegen erforderlich, den Stromrichter SR zur Spannungsregelung oder Batterieladeregelung zu betreiben, so kommen noch die entsprechenden Stromrichterverluste hinzu, durch die sich die Verlustleistung etwa verdoppeln kann. Im Wechselrichterbetrieb hingegen bedingen Filter und Trafo konstante Anteile, die zu einer Verlustleistung von z.B. 5% bei einer Nennleistung von 40 kVA führen.

Die Vorrichtung kann das Netz von einer Blindstrom-Belastung entlasten, indem Stromrichter und Speicher praktisch als Phasenschieber an der sicheren Schiene betrieben werden. Dabei ist es möglich, gleichzeitig dem Netz auch noch die zur Aufladung des Speichers gegebenenfalls erforderliche Wirkleistung zu entnehmen. Dabei kann es aber auch zu einer Paralleleinspeisung aus Netz und Speicher
in die Verbraucher kommen.

Dieser Betrieb ist in den Fällen vorteilhaft, in denen
bei der Einspeisung aus dem Netz ein bestimmter Wert für
cos $\varphi$ eingehalten werden muß.

Z. B. bei schwachen Netzen kann es auch erforderlich
werden, zu Zeiten einer hohen anderweitigen Netzbelastung
die vom Netz in die Verbraucher einzuspeisende Leistung
herunterzusteuern. Dies ist durch eine vorübergehende
Paralleleinspeisung aus dem Netz und aus einer entsprechend großen Batterie durch geeignete Steuerung des
Stromrichters ebenfalls möglich. Ein derartiger Betrieb,
bei dem trotz an sich ungestörten Netzes die Leistungsentnahme aus dem Netz auf Kosten des Speichers gegebenenfalls bis auf Null heruntergeregelt wird, kann allgemein
für die Fälle vorgesehen werden, in denen der Speicher
nach längeren Ruhezeiten entladen werden muß.

Das beschriebene Öffnen des Schalters, bei dem die wirksame Induktivität auf den hohen Wert umgesteuert wird
und der Speicher die Verbraucher speist, ist stets bei
Spannungsspitzen oder -einbrüchen im Netz vorgesehen.
Derartige Netzstörungen können durch Überwachung der
Momentanwerte der Netz- oder Versorgungsspannung festgestellt werden.

Daneben gibt es aber Netzzustände, bei denen die Netzspannung und damit die Versorgungsspannung zwar gewisse
vorgegebene Toleranzgrenzen erreicht oder überschreitet,
aber durch einen Blindleistungsaustausch mit dem Speicher verhindert werden kann, daß die Verbraucherspannung
unzulässige Werte annimmt. Diese Zustände können durch
Überwachung des Effektivwertes bzw. eines geeigneten geglätteten Meßwertes (Mittelwertes) für die Netz- oder Versorgungsspannung erfaßt werden. In diesen Fällen bleibt der Schalter SW geschlossen und die wirksame Induktivität wird auf dem kleinen Wert gehalten; der Stromrichter aber wird entsprechend der Spannungsabweichung so gesteuert, daß er zur Aufrechterhaltung der erforderlichen Verbraucherspannung die jeweils benötigte Blindleistung zwischen Verbrauchern und Speichern austauscht. Das Netz gleicht dann nur noch die Blindleistungsbilanz der sicheren Schiene aus und liefert die Wirkleistung, die für die Verbraucher und gegebenenfalls für die Aufladung der Batterie benötigt wird.

Bei Verwendung einer Überwachungseinrichtung und eines Stromrichters, bei denen im ungestörten Zustand des Netzes der Stromrichter in Startbereitschaft gehalten und lediglich durch eine Zündimpulsverriegelung elektronisch gesperrt werden kann, ergibt sich die vorteilhafte Möglichkeit, den Stromrichter bei aufgeladenem Energiespeicher und ungestörtem Netz in diesem gesperrten Zustand zu halten und erst zuzuschalten, wenn eine Nachladung der Batterie erforderlich ist. Wird allerdings z.B. bei Spannungseinbrüchen der Schalter SW geöffnet, so muß der Stromrichter zur Einspeisung aus dem Speicher geöffnet werden. Auch nach Wiederkehr der Netzspannung bleibt der Stromrichter dann zunächst noch in Betrieb, wenn dies die Nachladung des Speichers bedingt.

<u>Patentansprüche</u>

1. Verfahren zur unterbrechungsfreien Stromversorgung von Wechselstrom-Verbrauchern (V1, V2, V3), wobei

a) der Zustand eines Wechselstrom-Versorgungsnetzes (N) überwacht wird,

b) im ungestörten Zustand die Verbraucher an das Versorgungsnetz über einen geschlossenen Schalter (SW) angeschlossen sind und ein Energiespeicher (B) über eine Stromrichteranordnung (SR) im aufgeladenen Zustand gehalten wird, und

c) beim Auftreten eines gestörten Zustandes die Verbraucher durch Öffnen des Schalters vom Versorgungsnetz getrennt und über die Stromrichteranordnung aus dem Energiespeicher gespeist werden,

d a d u r c h   g e k e n n z e i c h n e t ,   daß der Strom zwischen dem Schalter und der sicheren Schiene über eine induktive Anordnung geführt wird, deren wirksame Induktivität veränderbar ist und daß der Wert der wirksamen Induktivität im ungestörten Zustand auf einem kleinen Wert gehalten und beim Auftreten des gestörten Zustandes auf einen großen Wert gesteuert wird.

2. Verfahren nach Anspruch 1,   d a d u r c h   g e - k e n n z e i c h n e t ,   daß das Öffnen des Schalters (SW) und das Umsteuern der wirksamen Induktivität vorgenommen wird, wenn im Versorgungsnetz Spannungsspitzen oder -einbrüche auftreten und daß zwischen den Verbrauchern und dem Versorgungsnetz über die Stromrichteranordnung Blindleistung ausgetauscht wird, wenn die gemittelte Verbraucherspannung vorgegebene Toleranzgrenzen überschreitet, wobei der Schalter (SW) geschlossen und die wirksame Induktivität auf dem kleinen Wert gehalten wird.

3. Verfahren nach Anspruch 2, d a d u r c h   g e - k e n n z e i c h n e t ,   daß bei aufgeladenem Energiespeicher und ungestörtem Netz die Stromrichteranordnung in Startbereitschaft mit gesperrten Zündimpulsen gehalten wird, und daß die Stromrichteranordnung eingeschaltet ist und den Energiespeicher nachlädt, wenn bei geschlossenem Schalter die Speicherladung unter einem vorgegebenen Wert liegt.

4. Vorrichtung zur unterbrechungsfreien Stromversorgung von Verbrauchern mit folgenden Merkmalen:

a) zwischen einem Wechselstrom-Versorgungsnetz (N) und einer mit den Verbrauchern (V1, V2, V3) verbundenen sicheren Schiene (SS) ist ein Schalter (SW) angeordnet,

b) ein Energiespeicher (B) ist über eine Wechselrichteranordnung (SR) mit der sicheren Schiene (SS) verbunden,

c) eine Überwachungseinrichtung (UE) überwacht den störungsfreien oder gestörten Zustand des Wechselstrom-Versorgungsnetzes und den Ladungszustand des Energiespeichers,

d) die Überwachungseinrichtung hält bei ungestörtem Zustand des Netzes den Schalter (SW) geschlossen und steuert die Stromrichteranordnung (SR) so, daß der Energiespeicher annähernd konstant aufgeladen ist, und öffnet bei Auftreten einer Netzstörung den Schalter (SW) und steuert die Stromrichteranordnung (SR) so, daß an der sicheren Schiene (SS) eine ausreichende Versorgungsspannung aufrechterhalten wird,

0193039

gekennzeichnet    durch    folgende
weitere Merkmale:

e) die Überwachungseinrichtung steuert beim Auftreten der Netzstörung steuerbare Schaltmittel (SE) um, und

f) zwischen Schalter und sicherer Schiene ist eine Induktivitätsanordnung (I1, I2, I3) angeordnet, deren auf den zwischen Netz und sicherer Schiene fließenden Strom wirksame Induktivität durch die Schaltmittel umschaltbar ist.

5. Vorrichtung nach Anspruch 4, d a d u r c h   g e - k e n n z e i c h n e t ,   daß die Induktivitätsanordnung zwei Induktivitäten enthält, von denen eine durch die Schaltmittel kurzschließbar ist.

6. Vorrichtung nach Anspruch 4 oder 5, d a d u r c h   g e k e n n z e i c h n e t ,   daß die Induktivitätsanordnung aus einem Transformator (TR) besteht, dessen Primärwicklung zwischen Schalter und sicherer Schiene geschaltet ist und deren Sekundärwicklung über einen Gleichrichter, vorzugsweise einen ungesteuerten Gleichrichter mit einem elektronischen Hilfsschalter (SE), kurzschließbar ist.

7. Vorrichtung nach einem der Ansprüche 4 bis 6, d a - d u r c h   g e k e n n z e i c h n e t ,   daß die Induktivitätsanordnung von der Stromrichteranordnung und deren Anschlüssen induktiv entkoppelt ist.

8. Vorrichtung nach einem der Ansprüche 4 bis 7, d a - d u r c h   g e k e n n z e i c h n e t ,   daß der Energiespeicher über die Stromrichteranordnung nur an die sichere Schiene angekoppelt ist.

0193039

9. Vorrichtung nach einem der Ansprüche 4 bis 8, d a - d u r c h   g e k e n n z e i c h n e t ,   daß der Energiespeicher ein Gleichspannungsspeicher, insbesondere eine Batterie, ist und daß die Stromrichteranordnung ein im 4-Quadranten-Betrieb arbeitender Wechselrichter, vorzugsweise ein Pulswechselrichter, ist.

10. Vorrichtung nach Anspruch 9, d a d u r c h   g e - k e n n z e i c h n e t ,   daß der Wechselrichter auf konstante Ausgangs-Wechselspannung gesteuert ist.

11. Vorrichtung nach einem der Ansprüche 4 bis 10, d a - d u r c h   g e k e n n z e i c h n e t ,   daß den Verbrauchern ein Filter vorgeschaltet ist.

FIG 1

FIG 2

Europäisches
Patentamt

EUROPÄISCHER RECHERCHENBERICHT

Nummer der Anmeldung
0193039

EP 86 10 1856

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 085 245 (SILCON ELEKTRONIK) * Zusammenfassung; Seite 2, Zeilen 13-56; Seite 4, Zeile 76 - Seite 5, Zeile 72; Figuren 6,7 * | 1,3,4, 8-10 | H 02 J 9/06 |
| | --- | | |
| A | US-A-4 366 389 (S.W. HUSSEY) * Spalte 3, Zeile 39 - Spalte 6, Zeile 12; Figur 1 * | 1,3,4, 8,9 | |
| | --- | | |
| A | FR-A-1 482 728 (LICENTIA) * Seite 1, rechte Spalte, Zeile 32 - Seite 2, linke Spalte, Zeile 43; Seite 2, rechte Spalte, Zeilen 27-33; Figur 1 * | 1,2,4, 8,9,11 | |
| | --- | | RECHERCHIERTE SACHGEBIETE (Int. Cl.4) |
| A | GB-A-1 238 015 (ASSOCIATED ELECTRICAL INDUSTRIES) * Seite 1, Zeilen 11-25; Seite 2, Zeilen 65-83; Figur 3 * | 5 | H 02 J H 02 H |
| | --- | | |
| A | DE-A-2 710 625 (LICENTIA) * Seite 5, Zeile 28 - Seite 8, Zeile 10; Figur * | 6 | |
| | --- | | |
| A | US-A-4 309 734 (W.B. WAREN) * Spalte 9, Zeilen 1-50; Figur 3 * | 6 | |
| | ----- | | |

Der vorliegende Recherchenbericht wurde für alle Patentansprüche erstellt.

| Recherchenort DEN HAAG | Abschlußdatum der Recherche 14-05-1986 | Prüfer HELOT H.V. |
|---|---|---|